# EUROPEAN PATENT SPECIFICATION

(11) **EP 3 416 261 B1**
(45) Date of publication and mention of the grant of the patent: **21.07.2021**
(21) Application number: 17750231.7
(22) Date of filing: 07.02.2017
(51) Int. Cl.: H02J 7/00, B60L 5/36, B60L 5/40, B60L 53/18, B60L 53/31, B60L 53/16, B60L 53/60, B60L 53/30

(54) **CONTACT CHARGING SYSTEM, POWER FEEDING DEVICE, POWER RECEIVING DEVICE, AND CONTACT CHARGING METHOD**
KONTAKTAUFLADESYSTEM, STROMVERSORGUNGSVORRICHTUNG, STROMEMPFANGSVORRICHTUNG UND KONTAKTAUFLADEVERFAHREN
SYSTÈME DE CHARGE AVEC CONTACT, DISPOSITIF D'ALIMENTATION EN ÉNERGIE, DISPOSITIF DE RÉCEPTION D'ÉNERGIE ET PROCÉDÉ DE CHARGE AVEC CONTACT

(30) Priority: 08.02.2016 JP 2016021888
(43) Date of publication of application: 19.12.2018
(73) Proprietor: Honda Motor Co., Ltd., Tokyo 107-8556 (JP)
(72) Inventor: TAJIMA Takamitsu, Wako-shi Saitama 351-0193 (JP); MATSUMOTO Soichiro, Tokyo 107-8556 (JP)
(74) Representative: Beder, Jens
(86) International application number: PCT/JP2017/004325
(87) International publication number: WO 2017/138508

(56) References cited:
- WO-A1-2015/146393
- JP-A- H0 223 370
- JP-A- 2009 068 063
- JP-A- 2009 068 063
- US-A1- 2012 295 450

## Description

### Technical Field

The present invention relates to a contact charging system for charging a battery provided on the side of a power receiving device by use of a power feeding device, and a method for the same.

### Background Art

JP H07 - 283 852 A and JP 2006 - 049 123 A both describe chargers for charging a mobile phone battery. These inventions allow rotation of a power feeding element and/or a power receiving element so that the point of contact between the power feeding element and the power receiving element is not concentrated at a single point. Such a configuration makes the power feeding element and/or the power receiving element resistant to degradation due to abrasion.

JP 2012 - 034 543 A and JP 2011 - 135 739 A describe structures and/or systems for charging a battery of an electric automobile or a plug-in hybrid automobile (referred to as an electric vehicle). As shown by these publications, when a driving battery for an electric vehicle is charged, electric power is typically supplied after a power feeding terminal and a power receiving terminal are brought into contact with each other.

JP 2013 - 233 037 A and WO 2015/146393 A1 describe a system for charging a driving battery of an electric vehicle while the electric vehicle is travelling. In this invention, an arm having a power receiving terminal at its tip is extended from the travelling electric vehicle and the arm is brought into contact with a wire provided along a road. In this way, the battery is charged. A power receiving element, being supported on a shaft in a rotatable manner, rotates about the shaft by making contact with the wire during travelling of the vehicle.

US 2012 / 295 450 A1 discloses a rotary electrical contact device and method for providing current to and/or from a rotating member in which the device comprises a first sheave, a second sheave, a pair of orbital sheaves and a belt electrically coupling the first sheave and the orbital sheave as well as the second sheave and the orbital sheaves.

JP 2009 - 068 063 A discloses a film deposition system provided with a power source and a substrate holder, the power source having a power feeding electrode, the substrate holder having a stationary unit and a driving unit mounted on the stationary unit, the stationary unit being provided with a power receiving electrode electrically connected with the power feeding electrode, and a contact mechanism feeding the electric power from the power receiving electrode to the driving unit.

### Summary of Invention

In the inventions described in JP H07 - 283 852 A and JP 2006 - 049 123 A, the power feeding element and/or power receiving element do not rotate during charging of a battery. Such a configuration poses no problem with charging of a mobile phone battery. It is, however, problematic when a driving battery of an electric vehicle is charged. A driving battery of an electric vehicle stores more power than a mobile phone battery. Thus, if charging is performed at high power while the power feeding element and the power receiving element are in contact with each other in a non-movable manner during charging, the point of contact between the power feeding element and the power receiving element could produce heat, whereby the elements could be damaged.

In the inventions described in JP 2012 - 034 543 A and JP 2011 - 135 739 A, a long time is required to charge a high-capacity battery. The charging time can be shortened by using high charging power; however, significant heat could still be produced at the point (position) of contact between the power feeding terminal and the power receiving terminal and cause damage to the terminals.

In the invention described in JP 2013 - 233 037 A and WO 2015/146393 A1, the power receiving terminal moves together with the electric vehicle in the direction of travelling of the vehicle. When the power receiving element comes into contact with a wire in such a situation, frictional force occurs between the two. The frictional force causes the power receiving element to rotate. Thus, the power feeding terminal and the power receiving terminal are not damaged even with high charging power. The invention, however, does not contemplate contact charging of a vehicle while the vehicle is parked.

The present invention has been made in view of such a challenge, and an object thereof is to provide a contact charging system, power feeding device, power receiving device, and contact charging method that prevent damage to a power feeding terminal and a power receiving terminal even with high charging power.

The present invention provides a contact charging system for charging a power storage of an electric vehicle, the contact charging system including a power receiving terminal of a power receiving device of the electrical vehicle and a power feeding terminal of a stationary power feeding device installed externally to the electrical vehicle, by supplying electric power from the power feeding terminal of the power feeding device to the power receiving terminal of the power receiving device, in which the power feeding terminal and the power receiving terminal are both rotatable, the contact charging system further includes a rotational power mechanism that is configured to rotate about a rotation shaft either one of the power feeding terminal and the power receiving terminal, and when the power storage is charged, electric power is supplied from the power feeding terminal to the power receiving terminal while both the power feeding terminal and the power receiving terminal rorate with motive power being transmitted from either one of the power feeding terminal and the power receiving terminal to the other one due to rotation of the rotational power mechanism in a state in which the power feeding terminal and the power receiving terminal are pressed against each other.

In the contact charging system according to the present invention, either one of the power feeding terminal and the power receiving terminal is rotated by the rotational power mechanism. When either one of the power feeding terminal and the power receiving terminal is rotated while the power feeding terminal and the power receiving terminal are in contact with each other, the other terminal also rotates due to frictional force. The power feeding terminal and the power receiving terminal keep rotating, whereby the point of contact between the power feeding terminal and the power receiving terminal is not concentrated at a single part, thus preventing damage or adhesion of the power feeding terminal and the power receiving terminal even under high charging power.

In the contact charging system according to the present invention, the power feeding terminal and the power receiving terminal may each include a pair of terminals, the pair of terminals of either one of the power feeding terminal and the power receiving terminal may be on a same axis, and the rotational power mechanism may be configured to rotate the pair of terminals of either one of the power feeding terminal and the power receiving terminal about the axis. By thus making a pair of terminals rotatable about the same axis, the power feeding terminal or the power receiving terminal can be rotated with a simple structure.

The contact charging system according to the present invention may include brushes that are in contact with the pair of terminals of either one of the power feeding terminal and the power receiving terminal and that are connected with a wire line of either one of the power feeding terminal and the power receiving terminal. Inclusion of the brushes ensures that the power feeding terminal or the power receiving terminal is energized even when the power feeding terminal or the power receiving terminal is rotating.

The contact charging system according to the present invention may further include a controller that is configured to control a timing of starting up the rotational power mechanism and a timing of applying voltage to the power feeding terminal. The controller may apply voltage to the power feeding terminal after elapse of a predetermined time since starting up of the rotational power mechanism. By making voltage be applied only after the power feeding terminal and the power receiving terminal start rotating, it can be ensured that the power feeding terminal and the power receiving terminal rotate at the start of charging. Such a configuration keeps the point of contact between the power feeding terminal and the power receiving terminal from being concentrated at a single part, thus preventing damage or adhesion of the power feeding terminal and the power receiving terminal even in charging with high power supply.

The contact charging system according to the present invention may further include a detector that is configured to detect a contact between the power feeding terminal and the power receiving terminal, in which the controller may be configured to drive the rotational power mechanism and apply voltage to the power feeding terminal when a contact between the power feeding terminal and the power receiving terminal is detected by the detector. By driving the rotational power mechanism only after the power feeding terminal and the power receiving terminal are contact with each other, rotation of the rotational power mechanism is not wasted and hence power consumption can be reduced.

In the contact charging system according to the present invention, the power receiving terminal and the power feeding terminal may be enclosed by a cover when the power feeding terminal and the power receiving terminal are in a state of being in contact with each other. Enclosure of the power receiving terminal and the power feeding terminal with a cover can prevent exposure of the terminals that can be at a high voltage, even in the case of high electric power supply.

The present invention also provides a stationary power feeding device installed externally to an electrical vehicle including a power feeding terminal that supplies electric power to a power receiving terminal of a power receiving device of the electrical vehicle, in which the power feeding terminal is rotatable about a rotation shaft, the power receiving terminal is rotatable about a rotation shaft and the power feeding device further includes a rotational power mechanism that rotates the power feeding terminal about the rotation shaft.

In the power feeding device according to the present invention, the rotational power mechanism rotates the power feeding terminal. When the power feeding terminal is rotated while power feeding terminal and the power receiving terminal are in contact with each other, the power receiving terminal in contact also rotates due to frictional force. Such a configuration keeps the point of contact between the power feeding terminal and the power receiving terminal from being concentrated at a single part, thus preventing damage or adhesion of the power feeding terminal and the power receiving terminal even in charging with high power supply.

The present invention further provides a power receiving device of an electrical vehicle including a power receiving terminal to which electric power is input from a power feeding terminal of a stationary power feeding device installed externally to the electrical vehical and a power storage that stores the electric power, in which the power receiving terminal is rotatable about a rotation shaft, the power feeding terminal is rotatable about a rotation shaft and the power receiving device further includes a rotational power mechanism that rotates the power receiving terminal about the rotation shaft.

In the power receiving device according to the present invention, the rotational power mechanism rotates the power receiving terminal. When the power receiving terminal is rotated while the power feeding terminal and the power receiving terminal are in contact with each other, the power feeding terminal in contact also rotates due to frictional force. Such a configuration keeps the point of contact between the power feeding terminal and the power receiving terminal from being concentrated at a single part, thus preventing damage or adhesion of the power feeding terminal and the power receiving terminal even in charging with high power supply.

The present invention further provides a contact charging method for charging a power storage of an electrical vehicle, the contact charging system including a power receiving terminal of a power receiving device of the electrical vehicle and a power feeding terminal of a stationary power feeding device installed externally to the electrical vehicle, by bringing a power feeding terminal of a power feeding device and a power receiving terminal of the power receiving device into contact with each other and supplying electric power from the power feeding terminal to the power receiving terminal, in which the power feeding terminal and the power receiving terminal are brought into contact with each other while either one of the power feeding terminal and the power receiving terminal is being rotated about a rotation shaft, and electric power is supplied from the power feeding terminal to the power receiving terminal.

In the contact charging method according to the present invention, either one of the power feeding terminal and the power receiving terminal is rotated. When either one of the power feeding terminal and the power receiving terminal is rotated while they are in contact with each other, the other terminal in contact also rotates due to frictional force. Such a configuration keeps the point of contact between the power feeding terminal and the power receiving terminal from being concentrated at a single part, thus preventing damage or adhesion of the power feeding terminal and the power receiving terminal even in charging with high power supply. In the contact charging method according to the present invention, in response to detection of proximity or contact between the power feeding terminal and the power receiving terminal, either one of the power feeding terminal and the power receiving terminal may be rotated, after which supply of electric power from the power feeding terminal to the power receiving terminal may be started.

By making voltage be applied only after the power feeding terminal and the power receiving terminal start rotation, it can be ensured that the power feeding terminal and the power receiving terminal rotate at the start of charging. Such a configuration keeps the point of contact between the power feeding terminal and the power receiving terminal from being concentrated at a single part, thus preventing damage or adhesion of the power feeding terminal and the power receiving terminal even in charging with high power supply.

Since the point of contact between the power feeding terminal and the power receiving terminal is kept from being concentrated at a single part, adhesion of the power feeding terminal and the power receiving terminal can be prevented even in charging with high power supply.

### Brief Description of Drawings

FIG. 1A is a plan view showing a contact charging system for electric vehicles to which the present invention is applied, FIG. 1B is a side view thereof, and FIG. 1C is a front view thereof;
FIG. 2 schematically shows an internal configuration of a power feeding device according to a first embodiment;
FIG. 3 schematically shows an internal configuration of a power receiving head according to the first embodiment;
FIG. 4 is a block diagram showing a configuration of a contact charging system according to the first embodiment;
FIG. 5 is a flowchart illustrating an operation of the contact charging system according to first and second embodiments;
FIG. 6 schematically shows the internal configuration of the power feeding device according to the second embodiment;
FIG. 7 schematically shows the internal configuration of the power receiving head according to the second embodiment;
FIG. 8 is a block diagram showing a configuration of the contact charging system according to the second embodiment;
FIG. 9 is a block diagram showing a configuration of the contact charging system according to a third embodiment;
FIG. 10 is a flowchart illustrating the operation of the contact charging system according to the third embodiment;
FIG. 11 schematically shows the internal configuration of the power feeding device according to a fourth embodiment;
FIG. 12 is a plan view showing the contact charging system according to a fifth embodiment;
FIG. 13 is a front view showing the contact charging system according to a sixth embodiment;
FIG. 14 schematically shows the internal configuration of a power feeding head according to the sixth embodiment; and
FIG. 15 schematically shows the internal configuration of the power receiving device according to the sixth embodiment.

### Description of Embodiments

The present invention will be now described in detail by illustrating preferred embodiments with reference to the accompanying drawings. In the drawings, components are depicted with deformation. In addition, for the sake of illustration, the following description specifically uses the orientations of "upper" and "lower". The orientation of installation is however not limited for the devices according to the present invention.

### [1. Configuration of contact charging system 10]

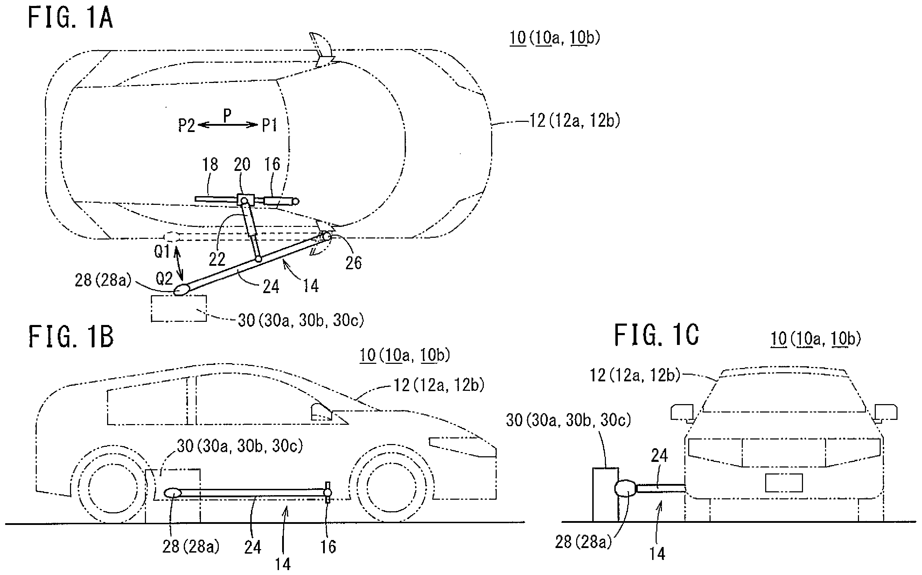

Using FIGS. 1A, 1B, and 1C, the configuration of a contact charging system 10 is described. The contact charging system 10 is composed of receiving terminal 84 of a power receiving device 12 of an electrical vehicle and a power feeding terminal 36 of a stationary power feeding device 30 installed externally to the electric vehicle 12.

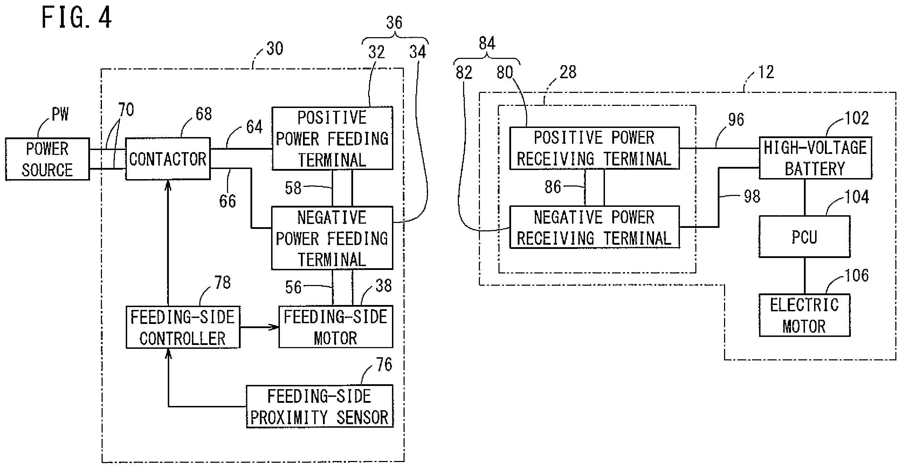

The electric vehicle 12 contains an electric motor 106 (see FIG. 4) for propelling the vehicle, such as a driving motor, and a high-voltage battery 102 (see FIG. 4) that supplies electric power to the electric motor 106. The electric vehicle 12 may be an electric automobile, a hybrid automobile with an internal combustion engine, or a fuel cell automobile with fuel cells.

The electric vehicle 12 is provided with a slide crank mechanism 14 having a power receiving head 28. The slide crank mechanism 14 has a first spring damper 16, an actuator 20, a second spring damper 22, and an arm 24. The first spring damper 16 is positioned along a front-back direction P of the electric vehicle 12, and one end of the first spring damper 16 is fixed to the electric vehicle 12. The first spring damper 16 has a slide rail 18. The slide rail 18 is provided with the actuator 20. The actuator 20 moves forward PI or backward P2 along the slide rail 18 in accordance with a driving signal sent from a control device (not shown). One end of the second spring damper 22 is attached to the actuator 20 in a rotatable manner. The other end of the second spring damper 22 is attached substantially at a middle part of the arm 24 in a rotatable manner. One end of the arm 24 is supported on the electric vehicle 12 via a spindle 26 in a rotatable manner. The other end of the arm 24 has a power receiving head 28. Instead of the arm 24, a cable with the power receiving head 28 may be provided.

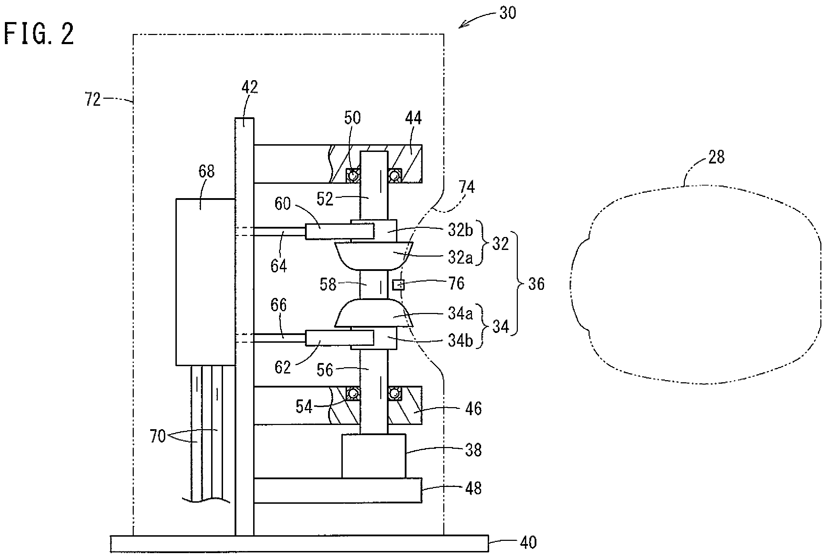

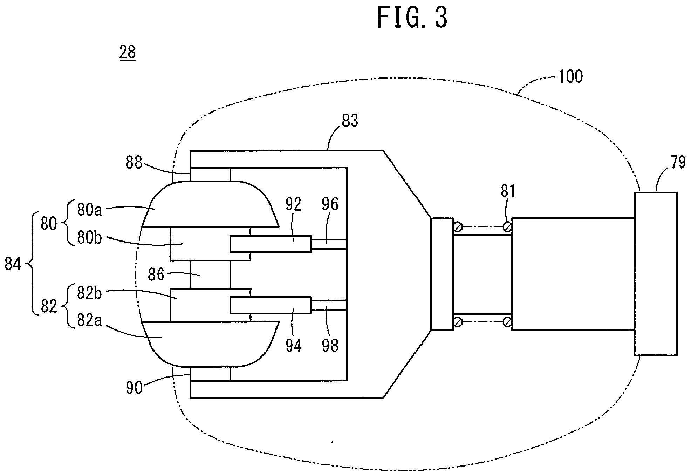

The slide crank mechanism 14 operates as follows. When the actuator 20 is located on the rear side of the slide rail 18, the arm 24 is accommodated in the electric vehicle 12. When the actuator 20 moves forward PI from this position, the arm 24 is pushed to the lateral side by the second spring damper 22. This causes the power receiving head 28 to move in Q1 direction about the spindle 26. When a power feeding terminal 36 (see FIG. 2) and a power receiving terminal 84 (see FIG. 3) come into contact with each other, the second spring damper 22 generates pressing force between the power feeding terminal 36 and the power receiving terminal 84. In contrast, when the actuator 20 moves backward P2, the arm 24 is pulled to the side of the electric vehicle 12 by the second spring damper 22. This causes the power receiving head 28 to move in Q2 direction about the spindle 26.

The power feeding device 30 is installed in a parking space or a dedicated charging space for the electric vehicle 12. When the power receiving head 28 comes into contact with the power feeding device 30, charging from the power feeding device 30 to the electric vehicle 12 is started.

### [2. First embodiment]

Using FIGS. 2 to 4, the power feeding device 30 and the power receiving head 28 used in the contact charging system 10 according to the first embodiment are described. In the first embodiment, in charging of the high-voltage battery 102, a feeding-side motor 38 is rotated in a state in which the power feeding terminal 36 and the power receiving terminal 84 are pressed against each other, thereby transmitting motive power from the power feeding terminal 36 to the power receiving terminal 84 to cause both the power feeding terminal 36 and the power receiving terminal 84 to rotate.

### [2.1. Configuration of power feeding device 30]

Using FIGS. 2 and 4, the configuration of the stationary power feeding device 30 is described. The power feeding device 30 according to the first embodiment includes the power feeding terminal 36 having a pair of terminals capable of rotating about a first rotation shaft (a first upper rotation shaft 52, a first lower rotation shaft 56), namely a positive power feeding terminal 32 and a negative power feeding terminal 34, and the feeding-side motor 38 for rotating the positive power feeding terminal 32 and the negative power feeding terminal 34 about the first rotation shaft. More specifically, the power feeding device 30 is configured as follows.

On a seat 40, a wall member 42 is provided so as to stand substantially vertically. A first support 44, a second support 46, and a motor support 48 are provided on the wall member 42 in this order from top to bottom such that the first support 44, the second support 46, and the motor support 48 are substantially parallel with the seat 40. The first support 44 has an upper bearing 50 and rotatably supports the first upper rotation shaft 52, which has insulating properties, via the upper bearing 50. The second support 46 has a lower bearing 54 and rotatably supports the first lower rotation shaft 56, which has insulating properties, via the lower bearing 54. The motor support 48 supports the feeding-side motor 38.

The positive power feeding terminal 32 is made from an electrically conductive material such as metal, and has an external contact portion 32a substantially in the shape of a truncated cone and an internal contact portion 32b substantially in the shape of a cylinder. The positive power feeding terminal 32 is integrally formed such that the bottom of the truncated cone of the external contact portion 32a is joined with one end of the internal contact portion 32b. Similarly, the negative power feeding terminal 34 is made from an electrically conductive material such as metal, and has an external contact portion 34a substantially in the shape of a truncated cone and an internal contact portion 34b substantially in the shape of a cylinder. The negative power feeding terminal 34 is integrally formed such that the bottom of the truncated cone of the external contact portion 34a is joined with one end of the internal contact portion 34b.

The positive power feeding terminal 32 and the negative power feeding terminal 34 are positioned such that the upper surface of the truncated cone of the external contact portion 32a and the upper surface of the truncated cone of the external contact portion 34a face each other. Then, by attachment of an insulating linking member 58 between the external contact portion 32a and the external contact portion 34a, the positive power feeding terminal 32 and the negative power feeding terminal 34 are linked together. To the internal contact portion 32b of the positive power feeding terminal 32, one end of the first upper rotation shaft 52 is attached. Similarly, to the internal contact portion 34b of the negative power feeding terminal 34, one end of the first lower rotation shaft 56 is attached. The first lower rotation shaft 56 is linked with an output shaft of the feeding-side motor 38. The first upper rotation shaft 52, the first lower rotation shaft 56, and the linking member 58 are positioned on the same axis. With such a configuration, the first lower rotation shaft 56, the negative power feeding terminal 34, the linking member 58, the positive power feeding terminal 32, and the first upper rotation shaft 52 are linked to the output shaft of the feeding-side motor 38. Then, when the feeding-side motor 38 rotates, the positive power feeding terminal 32 and the negative power feeding terminal 34 rotate.

A positive brush 60 is in contact with a partial outer periphery of the internal contact portion 32b of the positive power feeding terminal 32, and a negative brush 62 is in contact with a partial outer periphery of the internal contact portion 34b of the negative power feeding terminal 34. The positive brush 60 and the negative brush 62 are electrically connected by harnesses 64, 66, respectively, with a contactor 68 attached to the wall member 42. The contactor 68 is electrically connected with an external power source PW (see FIG. 4) over a cable 70.

A recess 74 is formed in the front of a cover 72 of the power feeding device 30 (the righthand side in FIG. 2). The recess 74 has two openings formed therein such that a part of the external contact portion 32a of the positive power feeding terminal 32 and a part of the external contact portion 34a of the negative power feeding terminal 34 are exposed to the outside from the openings, respectively. In addition, a feeding-side proximity sensor 76 is provided somewhere in the recess 74, herein, between the positive power feeding terminal 32 and the negative power feeding terminal 34. The feeding-side proximity sensor 76 may instead be provided at a position opposite the power receiving head 28. The feeding-side proximity sensor 76 may be a proximity switch or a touch sensor.

As shown by FIG. 4, the power feeding device 30 has a feeding-side controller 78. The feeding-side controller 78 receives a detection signal from the feeding-side proximity sensor 76. It also sends a command signal to the feeding-side motor 38 (including a driver thereof) and the contactor 68.

### [2.2. Configurations of power receiving head 28 and electric vehicle 12]

Using FIGS. 3 and 4, the configurations of the power receiving head 28 and the electric vehicle 12 are described. The power receiving head 28 according to the first embodiment includes the power receiving terminal 84 having a positive power receiving terminal 80 and a negative power receiving terminal 82 which are capable of rotating about a second rotation shaft (a second upper rotation shaft 88, a second lower rotation shaft 90). More specifically, the power receiving head 28 is configured as follows.

An attachment member 79 is attached at the tip of the arm 24 (see FIG. 1A, for instance) via a bracket not illustrated. The attachment member 79 supports a supporting member 83 via a spring 81 so that the supporting member 83 is movable in the horizontal direction. As with the second spring damper 22 (see FIG. 1A, for instance), the spring 81 generates pressing force between the power feeding terminal 36 (see FIG. 2) and the power receiving terminal 84 in a state in which the power feeding terminal 36 and the power receiving terminal 84 are in contact with each other.

The positive power receiving terminal 80 is made from an electrically conductive material such as metal, and has an external contact portion 80a substantially in the shape of a truncated cone and an internal contact portion 80b substantially in the shape of a cylinder. The positive power receiving terminal 80 is integrally formed such that the bottom of the truncated cone of the external contact portion 80a is joined with one end of the internal contact portion 80b. Similarly, the negative power receiving terminal 82 is made from an electrically conductive material such as metal, and has an external contact portion 82a substantially in the shape of a truncated cone and an internal contact portion 82b substantially in the shape of a cylinder. The negative power receiving terminal 82 is integrally formed such that the bottom of the truncated cone of the external contact portion 82a is joined with one end of the internal contact portion 82b. During charging, the positive power receiving terminal 80 makes contact with the positive power feeding terminal 32 of the power feeding device 30, while the negative power receiving terminal 82 makes contact with the negative power feeding terminal 34 of the power feeding device 30.

The positive power receiving terminal 80 and the negative power receiving terminal 82 are positioned such that the other end of the internal contact portion 80b and the other end of the internal contact portion 82b face each other. Then, by attachment of an insulating linking member 86 between the internal contact portion 80b and the internal contact portion 82b, the positive power receiving terminal 80 and the negative power receiving terminal 82 are linked together. To the external contact portion 80a of the positive power receiving terminal 80, one end of the second upper rotation shaft 88 is attached. Similarly, to the external contact portion 82a of the negative power receiving terminal 82, one end of the second lower rotation shaft 90 is attached. The second upper rotation shaft 88, the second lower rotation shaft 90, and the linking member 86 are positioned on the same axis. With such a configuration, the second lower rotation shaft 90, the negative power receiving terminal 82, the linking member 86, the positive power receiving terminal 80, and the second upper rotation shaft 88 are linked together. The second upper rotation shaft 88 and the second lower rotation shaft 90 are rotatably supported by the supporting member 83.

A positive brush 92 is in contact with a partial outer periphery of the internal contact portion 80b of the positive power receiving terminal 80, and a negative brush 94 is in contact with a partial outer periphery of the internal contact portion 82b of the negative power receiving terminal 82. The positive brush 92 and the negative brush 94 are electrically connected with the high-voltage battery 102 (see FIG. 4) by harnesses 96, 98, respectively.

A cover 100 of the power receiving head 28 has two openings formed therein such that a part of the external contact portion 80a of the positive power receiving terminal 80 and a part of the external contact portion 82a of the negative power receiving terminal 82 are exposed to the outside from the openings, respectively.

As shown by FIG. 4, the electric vehicle 12 supplies electric power from the high-voltage battery 102 via a PCU 104 to the electric motor 106 for propelling the vehicle.

### [2.3. Operation]

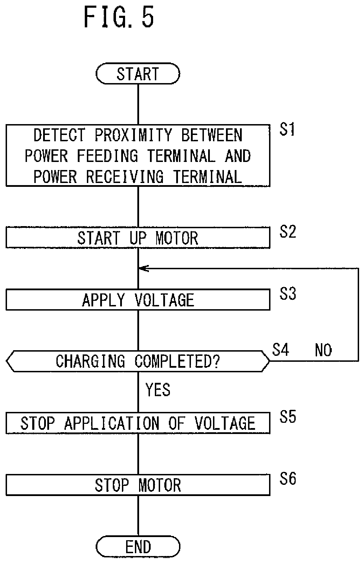

Using FIGS. 4 and 5, the operation of the contact charging system 10 according to the first embodiment is described. The electric vehicle 12 stops at a charging location near the power feeding device 30 and laterally extends the arm 24 (see FIG. 1A, for instance). As a result, the power receiving head 28 at the tip of the arm 24 is inserted into the recess 74 of the power feeding device 30 (see FIG. 2).

At step S1, the feeding-side proximity sensor 76 detects proximity (contact) between the power feeding terminal 36 provided on the power feeding device 30 and the power receiving terminal 84 provided on the power receiving head 28. Upon detection, the feeding-side proximity sensor 76 sends a detection signal to the feeding-side controller 78.

At step S2, the feeding-side controller 78 sends a startup signal to a driver of the feeding-side motor 38. The driver starts application of voltage to the feeding-side motor 38 in response to the startup signal. As a result, the feeding-side motor 38 starts up and also the positive power feeding terminal 32 and the negative power feeding terminal 34, linked by the linking member 58, rotate about the first rotation shaft (the first upper rotation shaft 52, the first lower rotation shaft 56; see FIG. 2). When the power feeding terminal 36 comes into contact with the power receiving terminal 84, frictional force acts between the two and the driving force of the feeding-side motor 38 is also transmitted to the power receiving terminal 84. Accordingly, the positive power receiving terminal 80 and the negative power receiving terminal 82 rotate about the second rotation shaft (the second upper rotation shaft 88, the second lower rotation shaft 90; see FIG. 3).

At step S3, the feeding-side controller 78 sends an energizing signal to the contactor 68. The contactor 68 closes a contact in response to the energizing signal to apply voltage to the power feeding terminal 36. The high-voltage battery 102 of the electric vehicle 12 is thereby charged. The feeding-side controller 78 preferably provides a time lag of a predetermined duration or longer between the timing of starting up the feeding-side motor 38 at step S2 and the timing of applying voltage to the power feeding terminal 36 at step S3. In this manner, voltage can be applied after placing both the power feeding terminal 36 and the power receiving terminal 84 into operation.

At step S4, the feeding-side controller 78 determines whether charging has been completed or not. Completion of charging may be determined by detecting a reduction in current value, for example. Alternatively, a predetermined charging time may be established and charging may be determined to be completed if the time elapsed since the application of voltage was started exceeds the predetermined charging time. If charging is not completed yet (step S4: NO), the flow returns to the process at step S3 to continue the application of voltage. If charging has been completed (step S4: YES), the flow proceeds to the process at step S5.

At step S5, the feeding-side controller 78 sends a cutoff signal to the contactor 68. The contactor 68 opens the contact in response to the cutoff signal to stop the application of voltage to the power feeding terminal 36.

At step S6, the feeding-side controller 78 sends a stop signal to the driver of the feeding-side motor 38. The driver stops the application of voltage to the feeding-side motor 38 in response to the stop signal. As a result, the feeding-side motor 38 stops and the rotation of the power feeding terminal 36 and the power receiving terminal 84 stops as well. The feeding-side controller 78 preferably provides a time lag of a predetermined duration or longer between the timing of stopping the application of voltage to the power feeding terminal 36 at step S5 and the timing of stopping the feeding-side motor 38 at step S6. In this manner, the operation of the power feeding terminal 36 and the power receiving terminal 84 can be stopped after stopping the application of voltage.

### [3. Second embodiment]

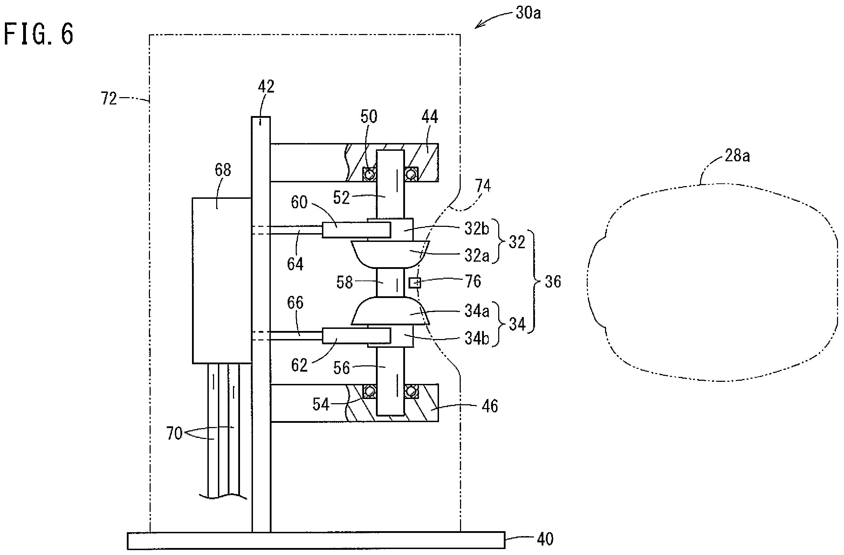

Using FIGS. 6 to 8, a power feeding device 30a and a power receiving head 28a used in a contact charging system 10a according to the second embodiment (see FIG. 1A, for instance) are described. In the second embodiment, in charging of the high-voltage battery 102, a receiving-side motor 110 is rotated in a state in which the power feeding terminal 36 and the power receiving terminal 84 are pressed against each other, thereby transmitting motive power from the power receiving terminal 84 to the power feeding terminal 36 to cause both the power feeding terminal 36 and the power receiving terminal 84 to rotate.

### [3.1. Configuration of power feeding device 30a]

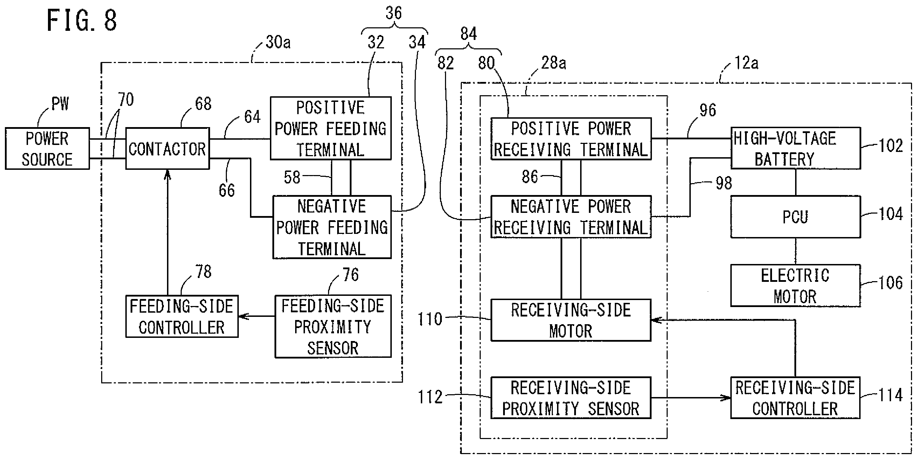

Using FIGS. 6 and 8, the configuration of the power feeding device 30a is described. The power feeding device 30a according to the second embodiment includes the power feeding terminal 36 having a pair of terminals capable of rotating about the first rotation shaft (the first upper rotation shaft 52, the first lower rotation shaft 56), namely the positive power feeding terminal 32 and the negative power feeding terminal 34.

The configuration of the power feeding device 30a has many in common with that of the power feeding device 30 according to the first embodiment shown by FIGS. 2 and 4. Thus, for the power feeding device 30a shown by FIGS. 6 and 8, components that are common to the power feeding device 30 are given the same reference characters and are not described again. The power feeding device 30a shown by FIGS. 6 and 8 is different from the power feeding device 30 shown by FIGS. 2 and 4 in that the power feeding device 30a does not use the feeding-side motor 38.

### [3.2. Configurations of the power receiving head 28a and electric vehicle 12a]

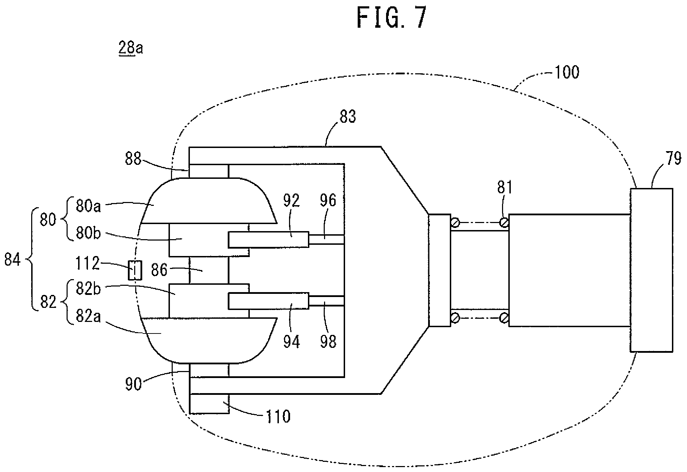

Using FIGS. 7 and 8, the configurations of the power receiving head 28a and the electric vehicle 12a are described. The power receiving head 28a according to the second embodiment includes the power receiving terminal 84 having the positive power receiving terminal 80 and the negative power receiving terminal 82 which are capable of rotating about the second rotation shaft (the second upper rotation shaft 88, the second lower rotation shaft 90), and the receiving-side motor 110 for rotating the positive power receiving terminal 80 and the negative power receiving terminal 82 about the second rotation shaft.

The configurations of the power receiving head 28a and the electric vehicle 12a have many in common with those of the power receiving head 28 and the electric vehicle 12 according to the first embodiment shown by FIGS. 3 and 4. Thus, for the power receiving head 28a and the electric vehicle 12a shown by FIGS. 7 and 8, components that are common to the power receiving head 28 and the electric vehicle 12 are given the same reference characters and are not described again. The power receiving head 28a shown by FIG. 7 is different from the power receiving head 28 shown by FIG. 3 in that the power receiving head 28a has a receiving-side motor 110 and a receiving-side proximity sensor 112. The electric vehicle 12a shown by FIG. 8 is different from the electric vehicle 12 shown by FIG. 4 in that the electric vehicle 12a has a receiving-side controller 114 in addition to the power receiving head 28a.

The second lower rotation shaft 90 is linked with the output shaft of the receiving-side motor 110. With such a configuration, the second lower rotation shaft 90, the negative power receiving terminal 82, the linking member 86, the positive power receiving terminal 80, and the second upper rotation shaft 88 are linked with the output shaft of the receiving-side motor 110. Then, when the receiving-side motor 110 rotates, the positive power receiving terminal 80 and the negative power receiving terminal 82 rotate.

The receiving-side proximity sensor 112 is provided somewhere on the cover 100, herein, between the positive power feeding terminal 32 and the negative power feeding terminal 34. The receiving-side proximity sensor 112 may instead be provided at a position opposite the power feeding device 30a. The receiving-side proximity sensor 112 may be a proximity switch or a touch sensor.

As shown by FIG. 8, the electric vehicle 12a has the receiving-side controller 114. The receiving-side controller 114 receives a detection signal from the receiving-side proximity sensor 112. The receiving-side controller 114 receives also sends a command signal to the receiving-side motor 110 (including a driver thereof).

### [3.3. Operation]

The processing flow of the contact charging system 10a according to the second embodiment is the same as the processing flow of the contact charging system 10 according to the first embodiment (FIG. 5). Thus, the operation of the contact charging system 10 according to the second embodiment is described using FIGS. 5 and 8. The electric vehicle 12a stops at a charging location near the power feeding device 30a and laterally extends the arm 24 (see FIG. 1A, for instance). As a result, the power receiving head 28a at the tip of the arm 24 is inserted into the recess 74 of the power feeding device 30a (see FIG. 6).

At step S1, the feeding-side proximity sensor 76 and the receiving-side proximity sensor 112 detect proximity (contact) between the power feeding terminal 36 provided on the power feeding device 30a and the power receiving terminal 84 provided on the power receiving head 28a. Upon detection, the feeding-side proximity sensor 76 sends a detection signal to the feeding-side controller 78. The receiving-side proximity sensor 112 sends a detection signal to the receiving-side controller 114.

At step S2, the receiving-side controller 114 sends a startup signal to the driver of the receiving-side motor 110. The driver starts application of voltage to the receiving-side motor 110 in response to the startup signal. As a result, the receiving-side motor 110 starts up and also the positive power receiving terminal 80 and the negative power receiving terminal 82, linked by the linking member 86, rotate about the second rotation shaft (the second upper rotation shaft 88, the second lower rotation shaft 90; see FIG. 7). When the power receiving terminal 84 comes into contact with the power feeding terminal 36, frictional force acts between the two and the driving force of the receiving-side motor 110 is also transmitted to the power feeding terminal 36. Accordingly, the positive power feeding terminal 32 and the negative power feeding terminal 34 rotate about the first rotation shaft (the first upper rotation shaft 52, the first lower rotation shaft 56; see FIG. 6).

At step S3, the feeding-side controller 78 sends an energizing signal to the contactor 68. The contactor 68 closes the contact in response to the energizing signal to apply voltage to the power feeding terminal 36. The high-voltage battery 102 of the electric vehicle 12 is thereby charged. The feeding-side controller 78 preferably provides a time lag of a predetermined duration or longer between the timing of starting up the receiving-side motor 110 at step S2 and the timing of applying voltage to the power feeding terminal 36 at step S3. In this manner, voltage can be applied after placing both the power feeding terminal 36 and the power receiving terminal 84 into operation.

At step S4, the feeding-side controller 78 determines whether charging has been completed or not. Completion of charging may be determined by detecting a reduction in current value, for example. Alternatively, a predetermined charging time may be established and charging may be determined to be completed if the time elapsed since the application of voltage was started exceeds the predetermined charging time. If charging is not completed yet (step S4: NO), the flow returns to the process at step S3 to continue the application of voltage. If charging has been completed (step S4: YES), the flow proceeds to the process at step S5.

At step S5, the feeding-side controller 78 sends a cutoff signal to the contactor 68. The contactor 68 opens the contact in response to the cutoff signal to stop the application of voltage to the power feeding terminal 36.

At step S6, the receiving-side controller 114 sends a stop signal to the driver of the receiving-side motor 110. For example, it sends a stop signal when separation (non-contact) is detected by the receiving-side proximity sensor 112. The driver stops the application of voltage to the receiving-side motor 110 in response to the stop signal. As a result, the receiving-side motor 110 stops and the rotation of the power feeding terminal 36 and the power receiving terminal 84 stops as well.

### [4. Third embodiment]

In the third embodiment, a power feeding device 30b and an electric vehicle 12b are interconnected via wireless communication, and a command signal for applying voltage and a command signal for stopping voltage application are sent from the side of the electric vehicle 12b to the side of the power feeding device 30b.

### [4.1. Configuration of power feeding device 30b]

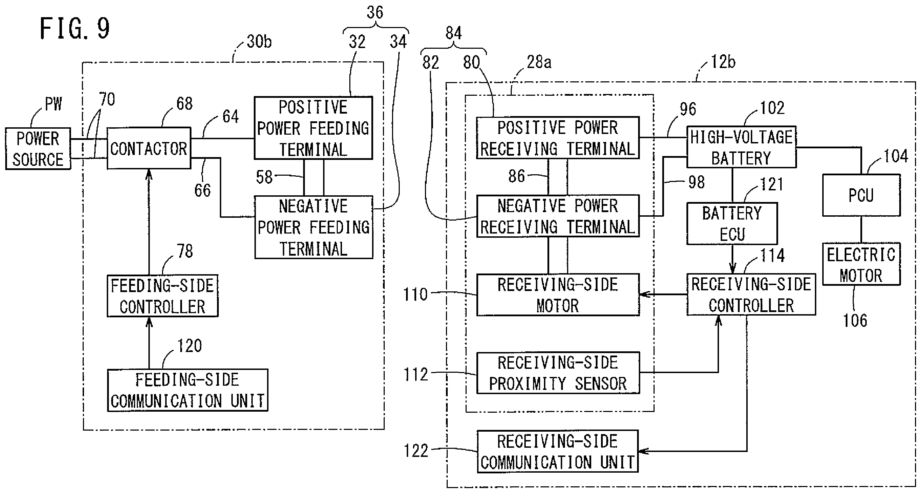

Using FIG. 9, the configuration of the power feeding device 30b is described. The configuration of the power feeding device 30b has many in common with that of the power feeding device 30a according to the second embodiment shown by FIG. 8. Thus, for the power feeding device 30b shown by FIG. 9, components that are common to the power feeding device 30a are given the same reference characters and are not described again. The power feeding device 30b shown by FIG. 9 is different from the power feeding device 30a shown by FIG. 8 in that the power feeding device 30b uses a feeding-side communication unit 120 and does not use the feeding-side proximity sensor 76. The feeding-side communication unit 120 receives a command signal sent from a receiving-side communication unit 122.

### [4.2. Configuration of electric vehicle 12b]

Using FIG. 9, the configuration of the electric vehicle 12b is described. The configuration of the electric vehicle 12b has many in common with that of the electric vehicle 12a according to the second embodiment shown by FIG. 8. Thus, for the electric vehicle 12b shown by FIG. 9, components that are common to the electric vehicle 12a are given the same reference characters and are not described again. The electric vehicle 12b shown by FIG. 9 is different from the electric vehicle 12a shown by FIG. 8 in that the electric vehicle 12b uses a battery ECU 121 and the receiving-side communication unit 122. The battery ECU 121 monitors a SOC (State Of Charge) of the high-voltage battery 102. The receiving-side communication unit 122 sends a command signal to the feeding-side communication unit 120.

### [4.3. Operation]

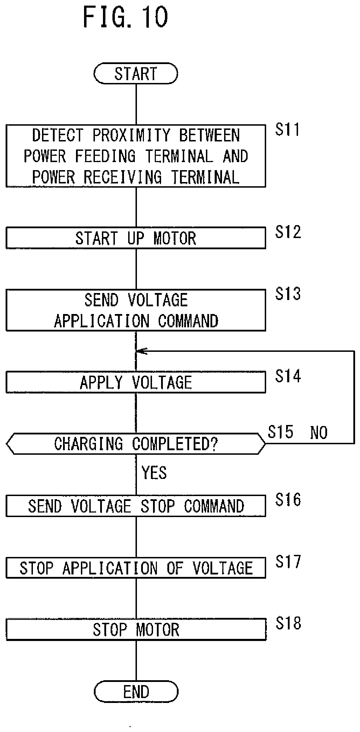

Using FIGS. 9 and 10, the operation of the contact charging system 10b according to the third embodiment is described. The electric vehicle 12b stops at a charging location near the power feeding device 30b and laterally extends the arm 24 (see FIG. 1A, for instance). As a result, the power receiving head 28 at the tip of the arm 24 is inserted into the recess 74 of the power feeding device 30b.

At step S11, the receiving-side proximity sensor 112 detects proximity (contact) between the power feeding terminal 36 provided on the power feeding device 30b and the power receiving terminal 84 provided on the power receiving head 28a. Upon detection, the receiving-side proximity sensor 112 sends a detection signal to the receiving-side controller 114.

At step S12, the receiving-side controller 114 sends a startup signal to the driver of the receiving-side motor 110. The driver starts application of voltage to the receiving-side motor 110 in response to the startup signal. As a result, the receiving-side motor 110 starts up and also the positive power receiving terminal 80 and the negative power receiving terminal 82, linked by the linking member 86, rotate about the second rotation shaft (the second upper rotation shaft 88, the second lower rotation shaft 90; see FIG. 7). When the power receiving terminal 84 comes into contact with the power feeding terminal 36, frictional force acts between the two and the driving force of the receiving-side motor 110 is also transmitted to the power feeding terminal 36. Accordingly, the positive power feeding terminal 32 and the negative power feeding terminal 34 rotate about the first rotation shaft (the first upper rotation shaft 52, the first lower rotation shaft 56; see FIG. 6).

At step S13, the receiving-side controller 114 instructs the receiving-side communication unit 122 to send a voltage application command. The receiving-side communication unit 122 sends to the feeding-side communication unit 120 a command signal for applying voltage. The feeding-side communication unit 120 receives the command signal sent from the receiving-side communication unit 122. The receiving-side controller 114 preferably provides a time lag of a predetermined duration or longer between the timing of starting up the receiving-side motor 110 at step S12 and the timing of sending a command signal for applying voltage at step S13. In this manner, voltage can be applied after placing both the power feeding terminal 36 and the power receiving terminal 84 into operation.

At step S14, having received the command signal for applying voltage via the feeding-side communication unit 120, the feeding-side controller 78 sends an energizing signal to the contactor 68. The contactor 68 closes the contact in response to the energizing signal to apply voltage to the power feeding terminal 36. The high-voltage battery 102 of the electric vehicle 12b is thereby charged.

At step S15, the battery ECU 121 monitors the SOC of the high-voltage battery 102. If the SOC is below a predetermined amount, it is determined that charging has not been completed (step S15: NO). In this case, the flow returns to the process at step S14 to continue the application of voltage. In contrast, if the SOC is equal to the predetermined amount or higher, it is determined that charging has been completed (step S15: YES). In this case, the flow proceeds to the process at step S16.

At step S16, the receiving-side controller 114 instructs the receiving-side communication unit 122 to send a voltage application stop command. The receiving-side communication unit 122 sends a command signal for stopping voltage application to the feeding-side communication unit 120. The feeding-side communication unit 120 receives the command signal sent from the receiving-side communication unit 122.

At step S17, having received the command signal for stopping voltage application via the feeding-side communication unit 120, the feeding-side controller 78 sends a cutoff signal to the contactor 68. The contactor 68 opens the contact in response to the cutoff signal to stop the application of voltage to the power feeding terminal 36.

At step S18, the receiving-side controller 114 sends a stop signal to the driver of the receiving-side motor 110. The driver stops the application of voltage to the receiving-side motor 110 in response to the stop signal. As a result, the receiving-side motor 110 stops and the rotation of the power feeding terminal 36 and the power receiving terminal 84 stops as well. The receiving-side controller 114 preferably provides a time lag of a predetermined duration or longer between the timing of sending a command signal for stopping voltage application at step S17 and the timing of stopping the receiving-side motor 110 at step S18. In this manner, the operation of the power feeding terminal 36 and the power receiving terminal 84 can be stopped after stopping the application of voltage.

### [5. Fourth embodiment]

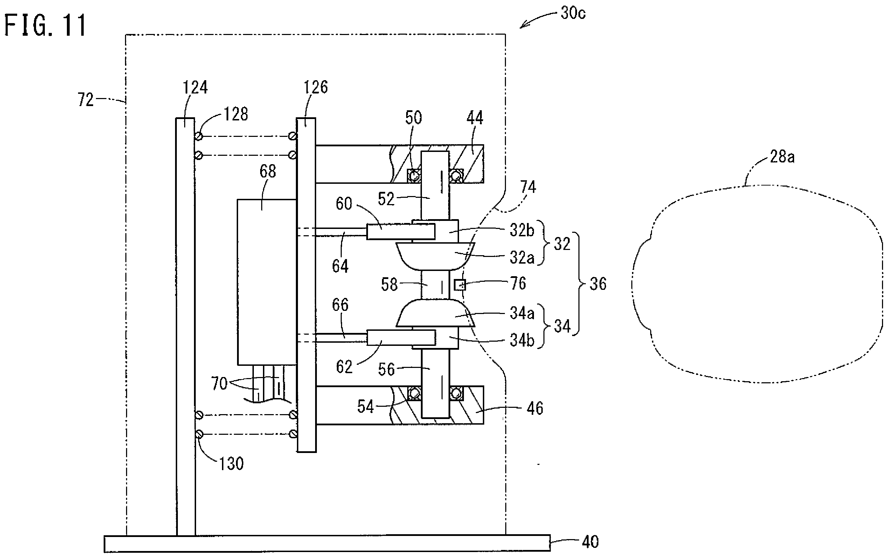

A power feeding device 30c according to the fourth embodiment shown by FIG. 11 is similar to the power feeding device 30a shown by FIG. 6 but includes a pressing mechanism (a first wall member 124, a second wall member 126, springs 128, 130). The pressing mechanism generates pressing force between the power feeding terminal 36 and the power receiving terminal 84 in a state in which the power feeding terminal 36 and the power receiving terminal 84 are in contact with each other.

On the seat 40, the first wall member 124 is provided so as to stand substantially vertically. On the first wall member 124, the second wall member 126 is supported via the springs 128, 130 so as to face the first wall member 124. The first support 44, the second support 46, and the contactor 68 are attached to the second wall member 126. Between the first support 44 and the second support 46, the power feeding terminal 36 is supported so as to be rotatable about the first rotation shaft (the first upper rotation shaft 52, the first lower rotation shaft 56).

It is also possible to provide the pressing mechanism (the first wall member 124, the second wall member 126, the springs 128, 130) in the power feeding device 30 shown by FIG. 2.

### [6. Fifth embodiment]

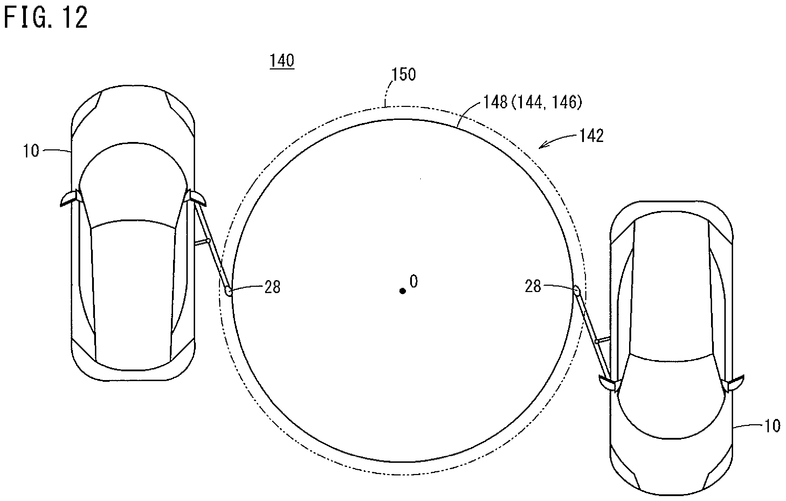

A contact charging system 140 shown by FIG. 12 is also possible. The contact charging system 140 has a power feeding device 142 which is capable of charging multiple electric vehicles 12 simultaneously. The power feeding device 142 has a power feeding terminal 148 which is composed of a positive power feeding terminal 144 and a negative power feeding terminal 146, which are shaped in a disk or a circular ring. The positive power feeding terminal 144 and the negative power feeding terminal 146 are linked together, and rotate about a rotation shaft O in response to driving of a motor not illustrated. The power feeding terminal 148 and other components are housed in a case 150.

Charging takes place by way of contact between the power receiving terminal 84 (see FIG. 3) provided on the power receiving head 28 of the electric vehicle 12 and the power feeding terminal 148 and application of voltage to the power feeding terminal 148. The power feeding terminal 148 and the power receiving terminal 84 press against each other via the second spring damper 22 provided in the electric vehicle 12 (see FIG. 1A, for instance) and the spring 81 provided in the power receiving head 28 (see FIG. 3).

### [7. Sixth embodiment]

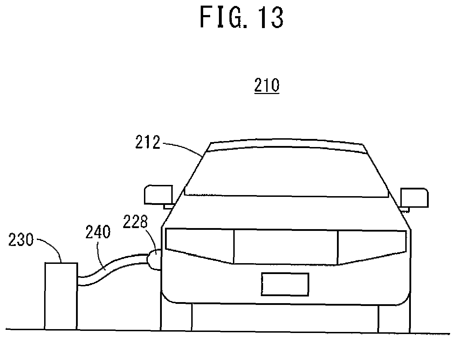

A contact charging system 210 shown by FIG. 13 is also possible. In the contact charging system 210 according to the sixth embodiment, unlike the first to fifth embodiments, a power feeding device 230 has a power feeding head 228 at a tip of a cable 240 (or an arm).

### [7.1. Configuration of power feeding head 228]

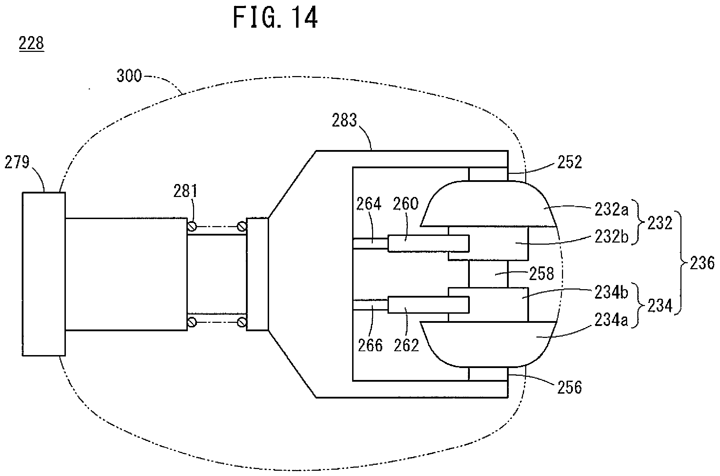

As shown by FIG. 14, the power feeding head 228 includes a power feeding terminal 236 having a positive power feeding terminal 232 and a negative power feeding terminal 234 which are capable of rotating about the first rotation shaft (a first upper rotation shaft 252, a first lower rotation shaft 256). The basic structure of the power feeding head 228 is the same as that of the power receiving head 28 shown by FIG. 3.

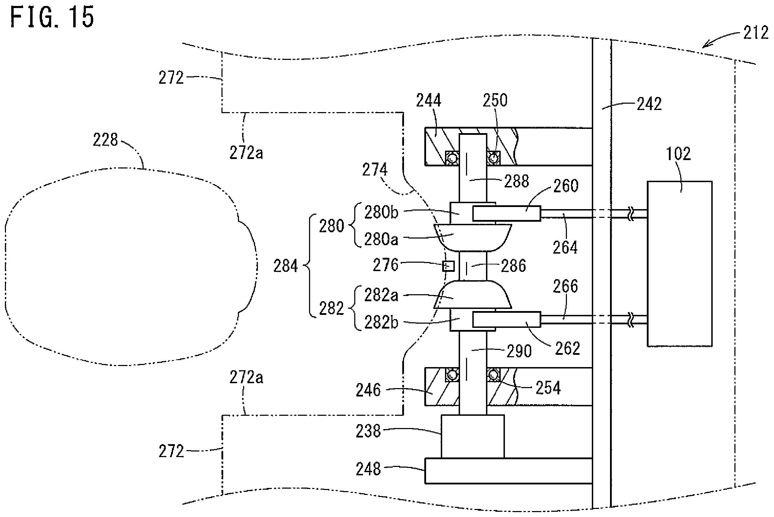

The exterior of the cable 240 (see FIG. 13) is covered by a tube. An attachment member 279 is attached at the tip of the tube. The attachment member 279 supports a supporting member 283 via a spring 281 so that the supporting member 283 is movable in the horizontal direction. The spring 281 generates pressing force between the power feeding terminal 236 and the power receiving terminal 284 in a state in which the power feeding terminal 236 and the power receiving terminal 284 (see FIG. 15) are in contact with each other.

The positive power feeding terminal 232 has an external contact portion 232a and an internal contact portion 232b. The negative power feeding terminal 234 has an external contact portion 234a and an internal contact portion 234b. By attachment of an insulating linking member 258 between the positive power feeding terminal 232 and the negative power feeding terminal 234, the positive power feeding terminal 232 and the negative power feeding terminal 234 are linked together. To the external contact portion 232a of the positive power feeding terminal 232, one end of the first upper rotation shaft 252 is attached. Similarly, to the external contact portion 234a of the negative power feeding terminal 234, one end of the first lower rotation shaft 256 is attached. The first upper rotation shaft 252, the first lower rotation shaft 256, and the linking member 258 are positioned on the same axis. With such a configuration, the first lower rotation shaft 256, the negative power feeding terminal 234, the linking member 258, the positive power feeding terminal 232, and the first upper rotation shaft 252 are linked together. The first upper rotation shaft 252 and the first lower rotation shaft 256 are rotatably supported by the supporting member 283.

A positive brush 260 is in contact with a partial outer periphery of the internal contact portion 232b of the positive power feeding terminal 232, and a negative brush 262 is in contact with a partial outer periphery of the internal contact portion 234b of the negative power feeding terminal 234. The positive brush 260 and the negative brush 262 are electrically connected with a contactor (not shown) by harnesses 264, 266, respectively.

A cover 300 of the power feeding head 228 has two openings formed therein such that a part of the external contact portion 232a of the positive power feeding terminal 232 and a part of the external contact portion 234a of the negative power feeding terminal 234 are exposed to the outside from the openings, respectively.

### [7.2. Configuration of electric vehicle 212 (power receiving device)]

As shown by FIG. 15, the electric vehicle 212 includes a power receiving terminal 284 having a positive power receiving terminal 280 and a negative power receiving terminal 282 which are capable of rotating about the second rotation shaft (a second upper rotation shaft 288, a second lower rotation shaft 290), and a receiving-side motor 238 for rotating the positive power receiving terminal 280 and the negative power receiving terminal 282 about the second rotation shaft. Although the receiving-side motor 238 is supplied with electric power from a low-voltage battery (not shown) mounted in the electric vehicle 212, the electric power may be supplied from the high-voltage battery 102 to the receiving-side motor 238 by stepping down the output voltage of the high-voltage battery 102.

An attachment member 242 is provided on a frame (not shown) of the electric vehicle 212. The attachment member 242 is provided with a first support 244, a second support 246, and a motor support 248. The first support 244 rotatably supports an insulating second upper rotation shaft 288 via an upper bearing 250. The second support 246 rotatably supports an insulating second lower rotation shaft 290 via a lower bearing 254. The motor support 248 supports the receiving-side motor 238.

The positive power receiving terminal 280 has an external contact portion 280a and an internal contact portion 280b. The negative power receiving terminal 282 has an external contact portion 282a and an internal contact portion 282b. By attachment of an insulating linking member 286 between the positive power receiving terminal 280 and the negative power receiving terminal 282, the positive power receiving terminal 280 and the negative power receiving terminal 282 are linked together. To the internal contact portion 280b of the positive power receiving terminal 280, one end of the second upper rotation shaft 288 is attached. Similarly, to the internal contact portion 282b of the negative power receiving terminal 282, one end of the second lower rotation shaft 290 is attached. The second lower rotation shaft 290 is linked with the output shaft of the receiving-side motor 238. The second upper rotation shaft 288, the second lower rotation shaft 290, and the linking member 286 are positioned on the same axis. With such a configuration, the second lower rotation shaft 290, the negative power receiving terminal 282, the linking member 286, the positive power receiving terminal 280, and the second upper rotation shaft 288 are linked with the output shaft of the receiving-side motor 238. Then, when the receiving-side motor 238 rotates, the positive power receiving terminal 280 and the negative power receiving terminal 282 rotate.

The positive brush 260 is in contact with a partial outer periphery of the internal contact portion 280b of the positive power receiving terminal 280, and the negative brush 262 is in contact with a partial outer periphery of the internal contact portion 282b of the negative power receiving terminal 282. The positive brush 260 and the negative brush 262 are electrically connected with the high-voltage battery 102 by the harnesses 264, 266, respectively.

A cover 272 of the electric vehicle 212 (that is, the body surface of the electric vehicle 212) has a bottomed insertion hole 272a. The insertion hole 272a surrounds the power feeding terminal 236 and the power receiving terminal 284 when the power feeding terminal 236 and the power receiving terminal 284 have come to contact with each other. A recess 274 is formed in the bottom of the insertion hole 272a. The recess 274 has two openings formed therein such that a part of the external contact portion 280a of the positive power receiving terminal 280 and a part of the external contact portion 282a of the negative power receiving terminal 282 are exposed to the outside from the openings, respectively. Also, a receiving-side proximity sensor 276 is provided somewhere in the recess 274, herein, between the positive power receiving terminal 280 and the negative power receiving terminal 282. A lid (lid portion) may be provided that can provide separation from the outside of the electric vehicle 212 while the power feeding terminal 236 and the power receiving terminal 284 are in a state of being in contact with each other in the insertion hole 272a.

Although the power receiving terminal 284 is rotated by the receiving-side motor 238 in the sixth embodiment, a motor may be provided on the feeding side for rotation of the power feeding terminal 236.

### [8. Summation of the embodiments]

The contact charging system 10, 10a, 10b, 140, 210 according to the first to sixth embodiments charges the high-voltage battery 102 (a power storage) of the electric vehicle 12, 12a, 12b, 212 by supplying electric power from the power feeding terminal 36, 148, 236 of the power feeding device 30, 30a, 30b, 142, 230 to the power receiving terminal 84, 284 of the electric vehicle (power receiving device) 12, 12a, 12b, 212. The power feeding terminal 36, 148, 236 and the power receiving terminal 84, 284 are both rotatable. Further, the feeding-side motor 38 or the receiving-side motor 110, 238 (a rotational power mechanism) for rotating either one of the power feeding terminal 36, 148, 236 and the power receiving terminal 84, 284 is included. When the high-voltage battery 102 is charged, the rotational power mechanism is rotated in a state in which the power feeding terminal 36, 148, 236 and the power receiving terminal 84, 284 are pressed against each other, thereby transmitting motive power from either one of the power feeding terminal 36, 148, 236 and the power receiving terminal 84, 284 to the other one to cause both the power feeding terminal 36, 148, 236 and the power receiving terminal 84, 284 to rotate, and electric power is supplied from the power feeding terminal 36, 148, 236 to the power receiving terminal 84, 284 as the power feeding terminal 36, 148, 236 and the power receiving terminal 84, 284 rotate.

In the contact charging system 10, 10a, 10b, 140, 210, either one of the power feeding terminal 36, 148, 236 and the power receiving terminal 84, 284 is rotated by the feeding-side motor 38 or the receiving-side motor 110, 238. When either one of the power feeding terminal 36, 148, 236 and the power receiving terminal 84, 284 is rotated while the power feeding terminal 36, 148, 236 and the power receiving terminal 84, 284 are in contact with each other, the other terminal also rotates due to frictional force. Such continuous rotation of the power feeding terminal 36, 148, 236 and the power receiving terminal 84, 284 keeps the point of contact between the power feeding terminal 36, 148, 236 and the power receiving terminal 84, 284 from staying only in one portion, and thus prevents damage or adhesion of the power feeding terminal 36, 148, 236 and the power receiving terminal 84, 284 even with high charging power.

The feeding-side controller 78 or the receiving-side controller 114 controls the timing of starting up the feeding-side motor 38 or the receiving-side motor 110, 238, and the timing of applying voltage to the power feeding terminal 36, 148, 236. In doing so, the feeding-side controller 78 or the receiving-side controller 114 makes voltage applied to the power feeding terminal 36, 148, 236 after elapse of a predetermined time since starting up of the feeding-side motor 38 or the receiving-side motor 110.

By making voltage be applied only after the power feeding terminal 36, 148, 236 and the power receiving terminal 84, 284 start rotation, it can be ensured that the power feeding terminal 36, 148, 236 and the power receiving terminal 84, 284 rotate at the start of charging. Such a configuration keeps the point of contact between the power feeding terminal 36, 148, 236 and the power receiving terminal 84, 284 from being concentrated at a single part, thus preventing damage or adhesion of the power feeding terminal 36, 148, 236 and the power receiving terminal 84, 284 even in charging with high power supply.

### [9. Other embodiments]

Although the first to sixth embodiments show deformation as mentioned above, the present invention is not limited to the structures shown in the embodiments. The present invention may be embodied in any manner as long as it has the features of any one of the independent claims. That is, the pressing mechanism may not be necessarily formed of an elastic member, such as a spring or damper, but it may be formed of a retaining or fixing member for retaining the state of contact between the power feeding terminal 36 or the like and the power receiving terminal 84 or the like.

For example, in the first embodiment, the positive power feeding terminal 32 and the negative power feeding terminal 34 are linked together and also the positive power receiving terminal 80 and the negative power receiving terminal 82 are linked together. However, linking of only one of the two pairs will suffice. Either the linking of the positive power feeding terminal 32 and the negative power feeding terminal 34 or the linking of the positive power receiving terminal 80 and the negative power receiving terminal 82 would permit rotation of all the terminals by rotating one of the four terminals via a motor when the power feeding terminal 36 and the power receiving terminal 84 are in contact with each other. The same applies to the other embodiments as well.

In addition, although the first upper rotation shaft 52 and the first lower rotation shaft 56 are positioned on the same axis in the first embodiment, their axes may not be aligned with each other. Similarly, although the second upper rotation shaft 88 and the second lower rotation shaft 90 are positioned on the same axis, their axes may be out of alignment. The same applies to the other embodiments as well.

## Claims

1. A contact charging system (10) for charging a power storage (102) of an electrical vehicle, the contact charging system (10) including a power receiving terminal (84) of a power receiving device (12) of the electrical vehicle and a power feeding terminal (36) of a stationary power feeding device (30) installed externally to the electrical vehicle, by supplying electric power from the power feeding terminal (36) of the power feeding device (30) to the power receiving terminal (84) of the power receiving device (12),
**characterized in that**
the power feeding terminal (36) and the power receiving terminal (84) are both rotatable,
the contact charging system (10) further includes a rotational power mechanism (38) configured to rotate about a rotation shaft (52, 56, 88, 90) either one of the power feeding terminal (36) and the power receiving terminal (84), and
when the power storage (102) is charged, electric power is supplied from the power feeding terminal (36) to the power receiving terminal (84) while both the power feeding terminal (36) and the power receiving terminal (84) rotate with motive power being transmitted from either one of the power feeding terminal (36) and the power receiving terminal (84) to the other one due to rotation of the rotational power mechanism (38) in a state in which the power feeding terminal (36) and the power receiving terminal (84) are pressed against each other.

2. The contact charging system (10) according to claim 1, wherein
the power feeding terminal (36) and the power receiving terminal (84) each include a pair of terminals,
the pair of terminals of either one of the power feeding terminal (36) and the power receiving terminal (84) are on a same axis, and
the rotational power mechanism (38) is configured to rotate the pair of terminals of either one of the power feeding terminal (36) and the power receiving terminal (84) about the axis.

3. The contact charging system (10) according to claim 2, further comprising:
brushes that are in contact with the pair of terminals of either one of the power feeding terminal (36) and the power receiving terminal (84) and that are connected with a wire line of either one of the power feeding terminal (36) and the power receiving terminal (84).

4. The contact charging system (10) according to any one of claims 1 to 3, further comprising:
a controller (78) that is configured to control a timing of starting up the rotational power mechanism (38) and a timing of applying voltage to the power feeding terminal (36).

5. The contact charging system (10) according to claim 4, wherein the controller (78) is configured to apply voltage to the power feeding terminal (36) after elapse of a predetermined time since starting up of the rotational power mechanism (38).

6. The contact charging system (10) according to claim 4, further comprising:
a detector (76) that is configured to detect a contact between the power feeding terminal (36) and the power receiving terminal (84), wherein
the controller (78) is configured to drive the rotational power mechanism (38) and apply voltage to the power feeding terminal (36) when a contact between the power feeding terminal (36) and the power receiving terminal (84) is detected by the detector (76).

7. The contact charging system (10) according to any one of claims 1 to 6, wherein
the power receiving terminal (84) and the power feeding terminal (36) are enclosed by a cover while the power feeding terminal (36) and the power receiving terminal (84) are in a state of being in contact with each other.

8. A stationary power feeding device (30) installed externally to an electrical vehicle, comprising:
a power feeding terminal (36) that is able to supply electric power to a power receiving terminal (84) of a power receiving device (12) of the electrical vehicle,
**characterized in that**
the power feeding terminal (36) is rotatable about a rotation shaft (52, 56)
the power receiving terminal (84) is rotatable about a rotation shaft (88, 90),
the power feeding device (30) further includes a rotational power mechanism (38) configured to rotate the power feeding terminal (36) about the rotation shaft (52, 56), and
the power feeding terminal (36) is configured so that the power receiving terminal (84) is able to rotate due to frictional force when the power feeding terminal (36) and the power receiving terminal (84) are in contact with each other.

9. A power receiving device (12a) of an electrical vehicle, comprising:
a power receiving terminal (84) to which electric power can be input from a power feeding terminal (36) of a stationary power feeding device (30) installed externally to the electrical vehicle; and
a power storage (102) that stores the electric power,
**characterized in that**
the power receiving terminal (84) is rotatable about a rotation shaft (88, 90),
the power feeding terminal (36) is rotatable about a rotation shaft (52 56), and
the power receiving device (12a) further includes a rotational power mechanism (110) configured to rotate the power receiving terminal (84) about the rotation shaft (88, 90), and the power receiving terminal (84) is configured so that the power feeding terminal (36) is able to rotate due to frictional force when the power receiving terminal (84) and the power feeding terminal (36) are in contact with each other.

10. A contact charging method for charging a power storage (102) of an electrical vehicle with a contact charging system (10), the contact charging system (10) including a power receiving terminal (84) of a power receiving device (12) of the electrical vehicle and a power feeding terminal (36) of a stationary power feeding device (3) installed externally to the electrical vehicle, by bringing a power feeding terminal (36) of a power feeding device (30) and a power receiving terminal (84) of the power receiving device (12) into contact with each other and supplying electric power from the power feeding terminal (36) to the power receiving terminal (84), wherein
the power feeding terminal (36) and the power receiving terminal (84) are brought into contact with each other while either one of the power feeding terminal (36) and the power receiving terminal (84) is being rotated about a rotation shaft and the other terminal (84, 36) also rotates due to frictional force, and electric power is supplied from the power feeding terminal (36) to the power receiving terminal (84).

11. The contact charging method according to claim 10, wherein in response to detection of proximity or contact between the power feeding terminal (36) and the power receiving terminal (84), either one of the power feeding terminal (36) and the power receiving terminal (84) is rotated, after which supply of electric power from the power feeding terminal (36) to the power receiving terminal (84) is started.

## Patentansprüche

1. Kontaktgebundenes Ladesystem (10) zum Laden eines Energiespeichers (102) eines Elektrofahrzeugs, wobei das kontaktgebundenes Ladesystem (10) einen Energieaufnahmeanschluss (84) einer Energieaufnahmevorrichtung (12) des Elektrofahrzeugs und einen Energiezuführungsanschluss (36) einer außerhalb des Elektrofahrzeugs installierten stationären Energiezuführungsvorrichtung (30) aufweist, durch Zuführen von elektrischer Energie von dem Energiezuführungsanschluss (36) der Energiezuführungsvorrichtung (30) zu dem Energieaufnahmeanschluss (84) der Energieaufnahmevorrichtung (12),
**dadurch gekennzeichnet, dass**
der Energiezuführungsanschluss (36) und der Energieaufnahmeanschluss (84) beide drehbar sind, das kontaktgebundene Ladesystem (10) ferner einen Drehantriebsmechanismus (38) aufweist, der so ausgebildet ist, dass er sich um eine Rotationswelle (52, 56, 88, 90) entweder des Energiezuführungsanschlusses (36) oder des Energieaufnahmeanschlusses (84) dreht, und
wenn der Energiespeicher (102) aufgeladen ist, elektrische Energie von dem Energiezuführungsanschluss (36) zu dem Energieaufnahmeanschluss (84) zugeführt wird, während sich sowohl der Energiezuführungsanschluss (36) als auch der Energieaufnahmeanschluss (84) drehen, wobei Antriebsenergie von dem Energiezuführungsanschluss (36) zu dem Energieaufnahmeanschluss (84) aufgrund der Drehung des Drehantriebsmechanismus (38) in einem Zustand übertragen wird, in dem der Energiezuführungsanschluss (36) und der Energieaufnahmeanschluss (84) aneinander gedrückt werden.

2. Kontaktgebundenes Ladesystem (10) nach Anspruch 1, wobei
der Energiezuführungsanschluss (36) und der Energieaufnahmeanschluss (84) jeweils ein Paar von Anschlüssen umfassen,
das Paar von Anschlüssen entweder des Energiezuführungsanschlusses (36) oder des Energieaufnahmeanschlusses (84) auf einer gemeinsamen Achse liegt, und
der Drehantriebsmechanismus (38) so ausgebildet ist, dass er das Paar von Anschlüssen entweder des Energiezuführungsanschlusses (36) oder des Energieaufnahmeanschlusses (84) um die Achse dreht.

3. Kontaktgebundenes Ladesystem (10) nach Anspruch 2, ferner aufweisend:
Bürsten, die mit dem Paar von Anschlüssen des Energiezuführungsanschlusses (36) oder des Energieaufnahmeanschlusses (84) in Kontakt stehen und die mit einer Drahtleitung des Energiezuführungsanschlusses (36) oder des Energieaufnahmeanschlusses (84) verbunden sind.

4. kontaktgebundenes Ladesystem (10) nach einem der Ansprüche 1 bis 3, ferner aufweisend:
eine Steuerung (78), die so konfiguriert ist, dass sie einen Zeitpunkt des Anlaufens des Drehantriebsmechanismus (38) und einen Zeitpunkt des Anlegens von Spannung an den Energiezuführungsanschluss (36) steuert.

5. kontaktgebundenes Ladesystem (10) nach Anspruch 4, wobei die Steuerung (78) so konfiguriert ist, dass sie nach Ablauf einer vorbestimmten Zeit seit dem Anlaufen des Drehantriebsmechanismus (38) Spannung an den Energiezuführungsanschluss (36) anlegt.

6. kontaktgebundenes Ladesystem (10) nach Anspruch 4, ferner aufweisend:
einen Detektor (76), der so ausgebildet ist, dass er einen Kontakt zwischen dem Energiezuführungsanschluss (36) und dem Energieaufnahmeanschluss (84) erkennt, wobei
die Steuerung (78) so konfiguriert ist, dass sie den Drehantriebsmechanismus (38) aktiviert und Spannung an den Energiezuführungsanschluss (36) anlegt, wenn von dem Detektor (76) zwischen dem Energiezuführungsanschluss (36) und dem Energieaufnahmeanschluss (84) ein Kontakt festgestellt wird.

7. kontaktgebundenes Ladesystem (10) nach einem der Ansprüche 1 bis 6, wobei
der Energieaufnahmeanschluss (84) und der Energiezuführungsanschluss (36) in einem Zustand, in dem sie miteinander in Kontakt stehen, von einer Abdeckung umschlossen sind.

8. Stationäre Energiezuführungsvorrichtung (30), die extern an einem Elektrofahrzeug installiert ist, aufweisend:
einen Energiezuführungsanschluss (36), der in der Lage ist, elektrische Energie an einen Energieaufnahmeanschluss (84) einer Energieaufnahmevorrichtung (12) des Elektrofahrzeugs zu liefern,
**dadurch gekennzeichnet, dass**
der Energiezuführungsanschluss (36) um eine Rotationswelle (52, 56) drehbar ist;
der Energieaufnahmeanschluss (84) um eine Rotationswelle (88, 90) drehbar ist;
die Energiezuführungsvorrichtung (30) ferner einen Drehantriebsmechanismus (38) aufweist, der so ausgebildet ist, dass er den Energiezuführungsanschluss (36) um die Drehwelle (52, 56) dreht, und der Energiezuführungsanschluss (36) so ausgebildet ist, dass der Energieaufnahmeanschluss (84) in der Lage ist, sich aufgrund von Reibungskraft zu drehen, wenn der Energiezuführungsanschluss (36) und der Energieaufnahmeanschluss (84) miteinander in Kontakt stehen.

9. Energieaufnahmevorrichtung (12a) eines Elektrofahrzeugs, aufweisend:
einen Energieaufnahmeanschluss (84), in den elektrische Energie von einem Energiezuführungsanschluss (36) einer stationären Energiezuführungsvorrichtung (30), die außerhalb des Elektrofahrzeugs installiert ist, eingespeist werden kann; und
einen Energiespeicher (102), der die elektrische Energie speichert,
**dadurch gekennzeichnet, dass**
der Energieaufnahmeanschluss (84) um eine Rotationswelle (88, 90) drehbar ist,
der Energiezuführungsanschluss (36) um eine Rotationswelle (52, 56) drehbar ist, und
die Energieaufnahmevorrichtung (12a) ferner einen Drehantriebsmechanismus (110) aufweist, der so ausgebildet ist, dass er den Energieaufnahmeanschluss (84) um die Rotationswelle (88, 90) dreht, und der Energieaufnahmeanschluss (84) so ausgebildet ist, dass der Energiezuführungsanschluss (36) in der Lage ist, sich aufgrund von Reibungskraft zu drehen, wenn der Energieaufnahmeanschluss (84) und der Energiezuführungsanschluss (36) miteinander in Kontakt stehen.

10. Kontaktgebundenes Ladeverfahren zum Laden eines Energiespeichers (102) eines Elektrofahrzeugs mit einem kontaktgebundenen Ladesystem (10), wobei das kontaktgebundenen Ladesystem (10) eines Energieaufnahmeanschluss (84) einer Energieaufnahmevorrichtung (12) des Elektrofahrzeugs und einen Energiezuführungsanschluss (36) einer außerhalb des Elektrofahrzeugs installierten stationären Energiezuführungsvorrichtung (30) aufweist, indem ein Energiezuführungsanschluss (36) einer Energiezuführungsvorrichtung (30) und ein Energieaufnahmeanschluss (84) der Energieaufnahmevorrichtung (12) miteinander in Kontakt gebracht werden und elektrischer Strom von dem Energiezuführungsanschluss (36) dem Energieaufnahmeanschluss (84) zugeführt wird, wobei
der Energiezuführungsanschluss (36) und der Energieaufnahmeanschluss (84) miteinander in Kontakt gebracht werden, während entweder der Energiezuführungsanschluss (36) oder der Energieaufnahmeanschluss (84) um eine Rotationswelle gedreht wird und der andere Anschluss (84, 36) sich aufgrund von Reibungskraft ebenfalls dreht, und elektrischer Strom von dem Energiezuführungsanschluss (36) dem Energieaufnahmeanschluss (84) zugeführt wird.

11. Kontaktgebundenes Ladeverfahren nach Anspruch 10, wobei als Reaktion auf die Erkennung der Nähe oder des Kontakts zwischen dem Energiezuführungsanschluss (36) und dem Energieaufnahmeanschluss (84) entweder der Energiezuführungsanschluss (36) oder der Energieaufnahmeanschluss (84) gedreht wird, woraufhin mit der Zufuhr von elektrischer Energie vom Energiezuführungsanschluss (36) zum Energieaufnahmeanschluss (84) begonnen wird.

## Revendications

1. Système de charge avec contact (10) pour la charge d'un stockage d'énergie (102) d'un véhicule électrique, le système de charge avec contact (10) comportant une borne de réception d'énergie (84) d'un dispositif de réception d'énergie (12) du véhicule électrique et une borne de fourniture d'énergie (36) d'un dispositif de fourniture d'énergie stationnaire (30) installé à l'extérieur du véhicule électrique, par fourniture d'énergie électrique de la borne de fourniture d'énergie (36) du dispositif de fourniture d'énergie (30) à la borne de réception d'énergie (84) du dispositif de réception d'énergie (12),
**caractérisé en ce que**
la borne de fourniture d'énergie (36) et la borne de réception d'énergie (84) sont toutes les deux rotatives,
le système de charge par contact (10) comporte en outre un mécanisme d'énergie de rotation (38) configuré pour faire tourner autour d'un arbre de rotation (52, 56, 88, 90) une parmi la borne de fourniture d'énergie (36) et la borne de réception d'énergie (84), et
lorsque le stockage d'énergie (102) est chargé, de l'énergie électrique est fournie de la borne de fourniture d'énergie (36) à la borne de réception d'énergie (84) alors que la borne de fourniture d'énergie (36) et la borne de réception d'énergie (84) tournent toutes les deux, de l'énergie motrice étant transmise d'une parmi la borne de fourniture d'énergie (36) et la borne de réception d'énergie (84) à l'autre en raison de la rotation du mécanisme d'énergie de rotation (38) dans un état dans lequel la borne de fourniture d'énergie (36) et la borne de réception d'énergie (84) sont pressées l'une contre l'autre.

2. Système de charge par contact (10) selon la revendication 1, dans lequel la borne de fourniture d'énergie (36) et la borne de réception d'énergie (84) comportent chacune une paire de bornes,
la paire de bornes d'une parmi la borne de fourniture d'énergie (36) et la borne de réception d'énergie (84) est sur un même axe, et
le mécanisme d'énergie de rotation (38) est configuré pour faire tourner la paire de bornes d'une parmi la borne de fourniture d'énergie (36) et la borne de réception d'énergie (84) autour de l'axe.

3. Système de charge par contact (10) selon la revendication 2, comprenant en outre :
des balais qui sont en contact avec la paire de bornes d'une parmi la borne de fourniture d'énergie (36) et la borne de réception d'énergie (84) et qui sont raccordés avec une ligne de fil d'une parmi la borne de fourniture d'énergie (36) et la borne de réception d'énergie (84).

4. Système de charge par contact (10) selon l'une des revendications 1 à 3, comprenant en outre :
un dispositif de commande (78) qui est configuré pour commander un minutage de démarrage du mécanisme d'énergie de rotation (38) et un minutage d'application de tension à la borne de fourniture d'énergie (36).

5. Système de charge par contact (10) selon la revendication 4, dans lequel dans lequel le dispositif de commande (78) est configuré pour appliquer la tension à la borne de fourniture d'énergie (36) après écoulement d'un temps prédéterminé depuis le démarrage du mécanisme d'énergie de rotation (38).

6. Système de charge par contact (10) selon la revendication 4, comprenant en outre :
un détecteur (76) qui est configuré pour détecter un contact entre la borne de fourniture d'énergie (36) et la borne de réception d'énergie (84), dans lequel
le dispositif de commande (78) est configuré pour entraîner le mécanisme d'énergie de rotation (38) et appliquer la tension à la borne de fourniture d'énergie (36) lorsqu'un contact entre la borne de fourniture d'énergie (36) et la borne de réception d'énergie (84) est détecté par le détecteur (76).

7. Système de charge par contact (10) selon l'une des revendications 1 à 6, dans lequel
la borne de réception d'énergie (84) et la borne de fourniture d'énergie (36) sont enfermées par un couvercle alors que la borne de fourniture d'énergie (36) et la borne de réception d'énergie (84) sont dans un état de mise en contact l'une avec l'autre.

8. Dispositif de fourniture d'énergie stationnaire (30) installé à l'extérieur d'un véhicule électrique, comprenant :
une borne de fourniture d'énergie (36) qui est apte à fournir de l'énergie électrique à une borne de réception d'énergie (84) d'un dispositif de réception d'énergie (12) du véhicule électrique,
**caractérisé en ce que**
la borne de fourniture d'énergie (36) peut tourner autour d'un arbre de rotation (52, 56),
la borne de réception d'énergie (84) peut tourner autour d'un arbre de rotation (88, 90),
le dispositif de fourniture d'énergie (30) comporte en outre un mécanisme d'énergie de rotation (38) configuré pour faire tourner la borne de fourniture d'énergie (36) autour de l'arbre de rotation (52, 56), et
la borne de fourniture d'énergie (36) est configurée de sorte que la borne de réception d'énergie (84) soit apte à tourner en raison de la force de friction lorsque la borne de fourniture d'énergie (36) et la borne de réception d'énergie (84) sont en contact l'une avec l'autre.

9. Dispositif de réception d'énergie (12a) d'un véhicule électrique, comprenant :
une borne de réception d'énergie (84) dans laquelle de l'énergie électrique peut être entrée à partir d'une borne de fourniture d'énergie (36) d'un dispositif de fourniture d'énergie stationnaire (30) installé à l'extérieur du véhicule électrique ; et
un stockage d'énergie (102) qui stocke l'énergie électrique,
**caractérisé en ce que**
la borne de réception d'énergie (84) peut tourner autour d'un arbre de rotation (88, 90),
la borne de fourniture d'énergie (36) peut tourner autour d'un arbre de rotation (52, 56), et
le dispositif de réception d'énergie (12a) comporte en outre un mécanisme d'énergie de rotation (110) configuré pour faire tourner la borne de réception d'énergie (84) autour de l'arbre de rotation (88, 90), et
la borne de réception d'énergie (84) est configurée de sorte que la borne de fourniture d'énergie (36) soit apte à tourner en raison de la force de friction lorsque la borne de réception d'énergie (84) et la borne de fourniture d'énergie (36) sont en contact l'une avec l'autre.

10. Procédé de charge par contact pour la charge d'un stockage d'énergie (102) d'un véhicule électrique avec un système de charge par contact (10), le système de charge par contact (10) comportant une borne de réception d'énergie (84) d'un dispositif de réception d'énergie (12) du véhicule électrique et une borne de fourniture d'énergie (36) d'un dispositif de fourniture d'énergie stationnaire (3) installé à l'extérieur du véhicule électrique, en mettant une borne de fourniture d'énergie (36) d'un dispositif de fourniture d'énergie (30) et une borne de réception d'énergie (84) du dispositif de réception d'énergie (12) en contact l'une avec l'autre et fournissant de l'énergie électrique de la borne de fourniture d'énergie (36) à la borne de réception d'énergie (84), dans lequel
la borne de fourniture d'énergie (36) et la borne de réception d'énergie (84) sont mises en contact l'une avec l'autre alors qu'une parmi la borne de fourniture d'énergie (36) et la borne de réception d'énergie (84) est tournée autour d'un arbre de rotation et l'autre borne (84, 36) tourne aussi en raison de la force de friction, et de l'énergie électrique est fournie de la borne de fourniture d'énergie (36) à la borne de réception d'énergie (84).

11. Procédé de charge par contact selon la revendication 10, dans lequel en réponse à la détection de proximité ou contact entre la borne de fourniture d'énergie (36) et la borne de réception d'énergie (84), une parmi la borne de fourniture d'énergie (36) et la borne de réception d'énergie (84) est tournée, après quoi la fourniture d'énergie électrique de la borne de fourniture d'énergie (36) à la borne de réception d'énergie (84) est démarrée.
